Europäisches Patentamt

European Patent Office

Office européen des brevets

(19)

(11) Numéro de publication: **0 288 359**
**B1**

(12) **FASCICULE DE BREVET EUROPEEN**

(45) Date de publication du fascicule du brevet: **30.01.91**

(51) Int. Cl.⁵: **B 23 K 9/02, B 23 P 15/26**

(21) Numéro de dépôt: **88400894.7**

(22) Date de dépôt: **13.04.88**

(54) **Procédé de raccordement d'un tube droit de grande longueur à une structure et utilisation de ce procédé.**

(30) Priorité: **17.04.87 FR 8705543**

(43) Date de publication de la demande:
**26.10.88 Bulletin 88/43**

(45) Mention de la délivrance du brevet:
**30.01.91 Bulletin 91/05**

(84) Etats contractants désignés:
**BE DE GB IT NL**

(56) Documents cités:
**EP-A-0 172 435**
**FR-A-2 349 395**
**GB-A-1 222 973**
**US-A-3 275 795**

(73) Titulaire: **FRAMATOME**
**Tour Fiat 1, Place de la Coupole**
**F-92400 Courbevoie (FR)**

(72) Inventeur: **Forestier, frédéric**
**9, rue Jacques Moyron**
**F-69006-Lyon (FR)**
Inventeur: **Archer, Jacques**
**Résidence La Baleine 5, rue de Mérou**
**F-92290 Chatenay-Malabry (FR)**

(74) Mandataire: **Bouget, Lucien et al**
**Cabinet Lavoix 2, Place d'Estienne d'Orves**
**F-75441 Paris Cédex 09 (FR)**

Courier Press, Leamington Spa, England.

EP 0 288 359 B1

## Description

L'invention concerne un procédé de raccordement d'un tube droit de grande longueur à une structure comportant deux pièces en position fixe l'une par rapport à l'autre recevant chacune une extrémité du tube dans un logement correspondant pour son raccordement à la structure.

L'invention est relative en particulier au raccordement d'un tube de générateur de vapeur à tubes droits, à la structure du générateur comportant deux plaques tubulaires parallèles entre lesquelles sont fixés les tubes droits constituant le faisceau du générateur de vapeur.

On connait des générateurs de vapeur, en particulier des générateurs de vapeur de réacteur nucléaire à neutrons rapides refroidi par un métal liquide, qui comportent un faisceau constitué par un ensemble de tubes droits parallèles fixés à leurs extrémités dans des plaques tubulaires parallèles entre elles et solidaires de l'enveloppe externe du générateur de vapeur. Les plaques tubulaires délimitent à l'intérieur de l'enveloppe du générateur de vapeur trois zones successives qui constituent, pour la première, une boite à eau, pour la seconde, une zone de circulation du métal liquide caloporteur en contact avec la surface externe des tubes du faisceau et, pour la troisième un collecteur de vapeur.

Les plaques tubulaires sont percées sur toute leur épaisseur par des trous, au niveau de chacun desquels est fixée l'extrémité d'un des tubes du faisceau. Chacun des tubes assure donc la jonction entre la boite à eau et le collecteur de vapeur, l'eau d'alimentation du générateur de vapeur répartie dans l'ensemble des tubes du faisceau à la sortie de la boite à eau étant ensuite échauffée et vaporisée à l'intérieur des tubes, par contact thermique avec le métal liquide caloporteur. La vapeur formée dans les tubes est ensuite récupérée dans le collecteur de vapeur.

La longueur des tubes droits du faisceau qui correspond sensiblement à la distance séparant les deux plaques tubulaires peut être de l'ordre de 20 à 30 m et quelquefois supérieure, dans les générateurs de vapeur en cours de conception ou de construction. Les tubes du faisceau sont maintenus par des plaques entretoises disposées à intervalles réguliers dans la seconde zone du générateur de vapeur dans laquelle circule le métal liquide caloporteur. Les extrémités des tubes sont fixées aux faces en regard des deux plaques tubulaires, par l'intermédiaire de parties en saillie de ces plaques tubulaires, de forme tubulaire, appelées tétines.

Le montage et la fixation des tubes du faisceau d'un générateur de vapeur à tubes droits sont réalisés sur la structure du générateur de vapeur comportant les plaques tubulaires dans leur position relative définitive et les plaques entretoises de maintien des tubes. En revanche, l'enveloppe de la boite à eau et du collecteur de vapeur ne sont pas encore fixées sur les plaques tubulaires respectives.

Les tubes droits destinés à constituer le faisceau sont enfilés par l'extrémité du générateur de vapeur communiquant avec la boite à eau, au travers de la plaque tubulaire correspondante et des grilles entretoises, jusqu'au moment où l'extrémité antérieure du tube, dans le sens d'avancement, parvient au niveau de la tétine correspondante de la plaque tubulaire du côté du collecteur de vapeur. L'extrémité du tube est mise en contact avec l'extrémité de la tétine sur laquelle on réalise ensuite sa fixation par soudage.

Pour permettre l'introduction des tubes, les trous de la plaque tubulaire du côté de la boite à eau et les alésages intérieurs des tétines correspondantes ont un diamètre légèrement supérieur au diamètre extérieur des tubes.

Lorsque la première extrémité du tube a été fixée par soudage sur la plaque tubulaire du côté du collecteur de vapeur, la seconde extrémité du tube reste engagée sur une certaine longueur, à l'intérieur de la tétine correspondante de la plaque tubulaire, du côté de la boite à eau. En effet, la longueur des tubes destinés à constituer le faisceau est sensiblement supérieure à la distance séparant les extrémités en vis-à-vis de deux tétines correspondantes de la plaque tubulaire du côté de la boite à eau et de la plaque tubulaire du côté du collecteur de vapeur, respectivement. On peut ainsi réaliser dans tous les cas le raccordement du tube, même s'il existe de légères différences entre les distances séparant les tétines correspondantes des deux plaques tubulaires.

La seconde extrémité du tube engagée dans la tétine de la plaque tubulaire du côté de la boite à eau doit être fixée dans l'alésage de cette tétine par une opération de sertissage par élargissement diamètral, utilisant par exemple un dudgeon, complétée par un soudage.

Pour garantir une qualité constante et satisfaisante de la jonction entre la seconde extrémité des tubes et la plaque tubulaire du côté de la boite à eau, il est nécessaire d'opérer le sertissage et le soudage sur une partie du tube engagée dans l'alésage de la tétine, d'une longueur faible et parfaitement déterminée. Cette longueur doit être en pratique voisine de 2 mm, ce qui représente approximativement un/dix millième de la longueur totale du tube. La sur longueur du tube restant engagée dans la tétine de la plaque tubulaire du côté de la boite à eau, après fixation de la première extrémité du tube sur la plaque tubulaire opposée est la plupart du temps très supérieure à cette longueur faible requise pour réaliser une bonne jonction.

Il est donc nécessaire, avant de réaliser la fixation de la seconde extrémité du tube, d'assurer sa mise à longueur par un découpage effectué depuis l'intérieur du tube et dans sa zone située à l'intérieur de la tétine de la plaque tubulaire du côté de la boite à eau.

Une telle opération de découpage présente des inconvénients inhérents au fait que ce découpage a lieu à l'intérieur de la tétine.

En fin de découpage, la tétine peut être détériorée ou même découpée par l'outil de découpage du tube dont il n'est pas toujours possible de contrôler avec une très grande précision l'avance en direction radiale. D'autre part, les copeaux d'usinage qui se forment lors du découpage du tube sont recueillis dans une zone située à l'intérieur de la plaque tubulaire, si bien qu'il est difficile de les éliminer.

Enfin, il n'est pas possible d'assurer un réusinage de l'extrémité du tube tel qu'un ébavurage ou un chanfreinage, après son découpage.

Le procédé de raccordement d'un tube droit de générateur de vapeur est donc difficile à mettre en oeuvre et ne donne pas toute garantie quant à la jonction réalisée sur la seconde extrémité du tube.

Le but de l'invention est donc de proposer un procédé de raccordement d'un tube droit de grande longueur à une structure comportant deux pièces en position fixe l'une par rapport à l'autre entre lesquelles le tube est fixé par ses extrémités, le procédé consistant à mettre le tube en place dans la structure et à fixer l'une de ses extrémités sur une pièce correspondante ou première pièce, à découper le tube au voisinage de sa seconde extrémité pour sa mise à longueur et à fixer la seconde extrémité du tube à l'intérieur d'un logement ménagé dans la seconde pièce, sur une longueur de recouvrement faible et parfaitement déterminée, ce procédé de raccordement pouvant être mis en oeuvre d'une manière simple et assurant une trés bonne qualité de la fixation de la seconde extrémité du tube.

Dans ce but, préalablement à son découpage à longueur,

on refroidit le tube sur une partie au moins de sa longueur, jusqu'à une première température t1 de façon à obtenir une rétraction thermique suffisante de ce tube pour que la zone de découpage de sa seconde extrémité soit située, après refroidissement, à l'extérieur du logement de la seconde plaque tubulaire,

on réalise le découpage de l'extrémité du tube maintenu à la température t1,

on réchauffe le tube jusqu'à une seconde température t2 supérieure à la température t1, de façon que la seconde extrémité du tube se trouve engagée après réchauffage, dans le logement de la seconde, plaque tubulaire, sur la longueur de recouvrement requise, et

on réalise la soudage du tube sur la seconde plaque tubulaire, le tube étant maintenu à la seconde température t2.

Afin de bien faire comprendre l'invention, on va maintenant décrire, à titre d'exemple, en se référant aux figures jointes en annexe, un mode de réalisation du procédé de raccordement suivant l'invention dans le cas du raccordement d'un tube droit d'un générateur de vapeur.

La figure 1 est une vue en coupe longitudinale d'un générateur de vapeur à tubes droits,

La figure 2 est une vue en coupe agrandie des extrémités d'un tube du générateur de vapeur reliées à la première plaque tubulaire du côté du collecteur de vapeur et à la seconde plaque du côté de la boite à eau du générateur de vapeur, respectivement.

La figure 3 est une vue en coupe de la seconde extrémité d'un tube engagée à l'intérieur d'un logement de la plaque tubulaire du côté de la boite à eau, après fixation de la première extrémité du tube.

La figure 4 est une vue en coupe de l'extrémité du tube représentée sur la figure 3, après refroidissement du tube.

La figure 5 est une vue en coupe de l'extrémité du tube représentée sur la figure 4, pendant son découpage,

La figure 6 est une vue suivant 6-6 de la figure 5.

La figure 7 est une vue en coupe de l'extrémité du tube, à la fin de l'opération de découpage.

La figure 8 est une vue en coupe de l'extrémité du tube, avant sa fixation sur la seconde plaque tubulaire, du côté de la boite à eau.

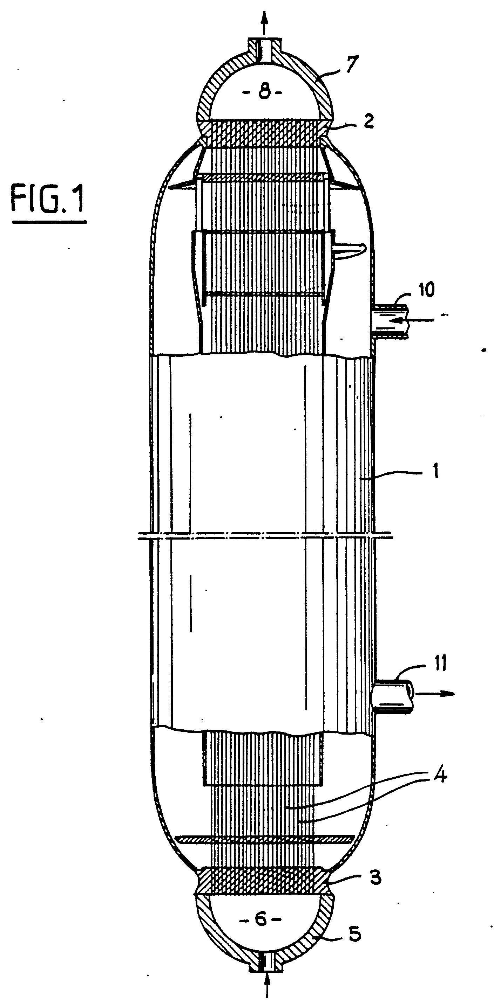

Sur la figure 1, on voit un générateur de vapeur à tubes droits comportant une enveloppe externe 1 et deux plaques tubulaires 2 et 3 fixées sur l'enveloppe à ses extrémités respectivement supérieure et inférieure, Les plaques tubulaires 2 et 3 sont percées de trous sur toute leur épaisseur et des tubes 4 droits et parallèles sont disposés entre les deux plaques 2 et 3 dans le prolongement des trous traversant ces plaques. La plaque inférieure 3 délimite avec une enveloppe hémisphérique 5 une boite à eau 6 communiquant avec les extrémités d'entrée des tubes 4. La plaque 2 délimite avec une enveloppe hémisphérique 7 un collecteur de vapeur 8 en communication avec les extrémités de sortie des tubes 4. Entre la boite à eau 6 et le collecteur de vapeur 8, l'enveloppe externe 1 du générateur de vapeur délimite une zone dans laquelle circule du métal liquide caloporteur tel que du sodium liquide pénétrant dans l'enveloppe 1 par une conduite 10 et sortant de cette enveloppe par une conduite 11.

De l'eau est introduite dans la boite à eau 6 qui en assure la répartition dans les tubes 4 du faisceau. Cette eau circule dans les tubes de bas en haut, s'échauffe et se vaporise au contact de la chaleur cédée par le métal liquide caloporteur. La vapeur formée est récupérée dans le collecteur 8.

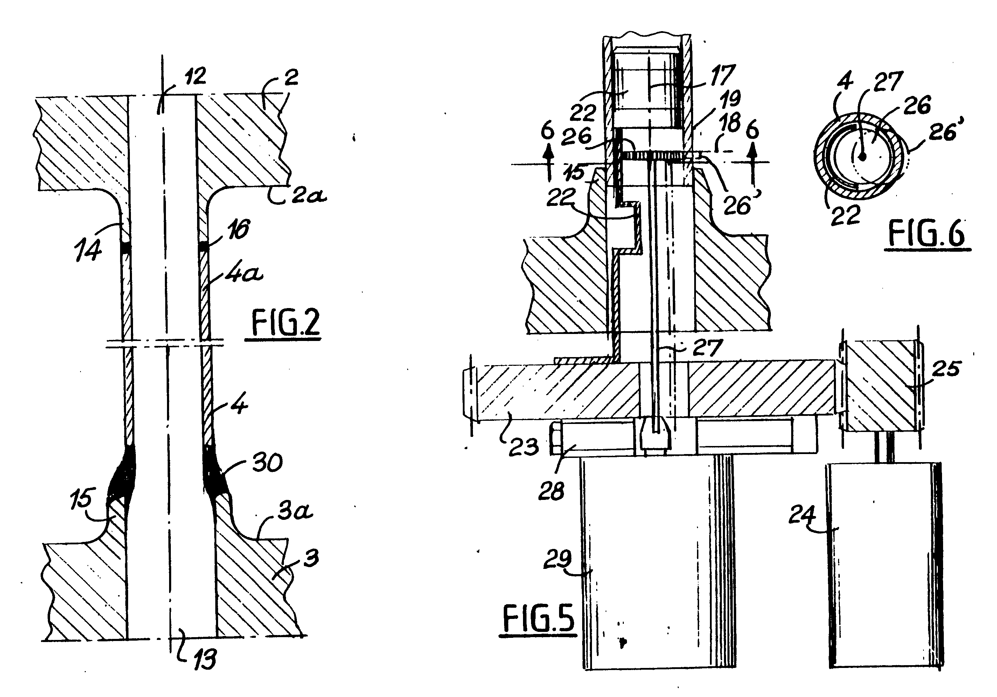

Sur la figure 2, on voit les extrémités d'un tube 4 du faisceau au niveau des zones de jonction avec la plaque tubulaire supérieure 2 et avec la plaque tubulaire inférieure 3, respectivement. La jonction est assurée par l'intermédiaire de parties 14 et 15 des plaques 2 et 3 respectivement, en saillie par rapport aux faces 2a et 3a en regard de ces plaques tubulaires. Les parties en saillies 14 et 15 des plaques tubulaires 2 et 3, de forme tubulaire, appelées tétines, sont disposées de façon à entourer l'extrémité de sortie d'une ouverture 12 ou 13 de la plaque tubulaire correspondante 2 ou 3 sur les faces 2a et 3a.

On voit que le diamètre du trou 13 traversant la plaque 3 et le diamètre intérieur de l'alésage de la tétine 15 sont légèrement supérieurs au diamètre extérieur du tube 4 dont la mise en place dans le faisceau peut être effectuée au travers de la plaque 3, avant la mise en place de l'enveloppe 5 de la boite à eau 6. L'ensemble des tubes 4 du faisceau peut être mis en place à travers la plaque tubulaire 3, de façon que, pour chacun de ces tubes, l'extrémité antérieure 4a vienne en coïncidence avec la tétine 14 correspondante de la plaque tubulaire 2. La fixation du tube 4 sur la tétine 14 est alors effectuée grâce à un outil spécial introduit à travers la plaque tubulaire 2 et permettant d'assurer le maintien en position de l'extrémité 4a du tube 4 contre la tétine 14 et la réalisation d'une soudure annulaire de jonction 16.

Le tube 4 est alors fixé à son extrémité antérieure 4a par une soudure bout à bout sur la tétine 14 de la première plaque tubulaire 2 et engagé dans la tétine 15 de la seconde plaque tubulaire 3, sur une certaine longueur de sa partie postérieure 4b.

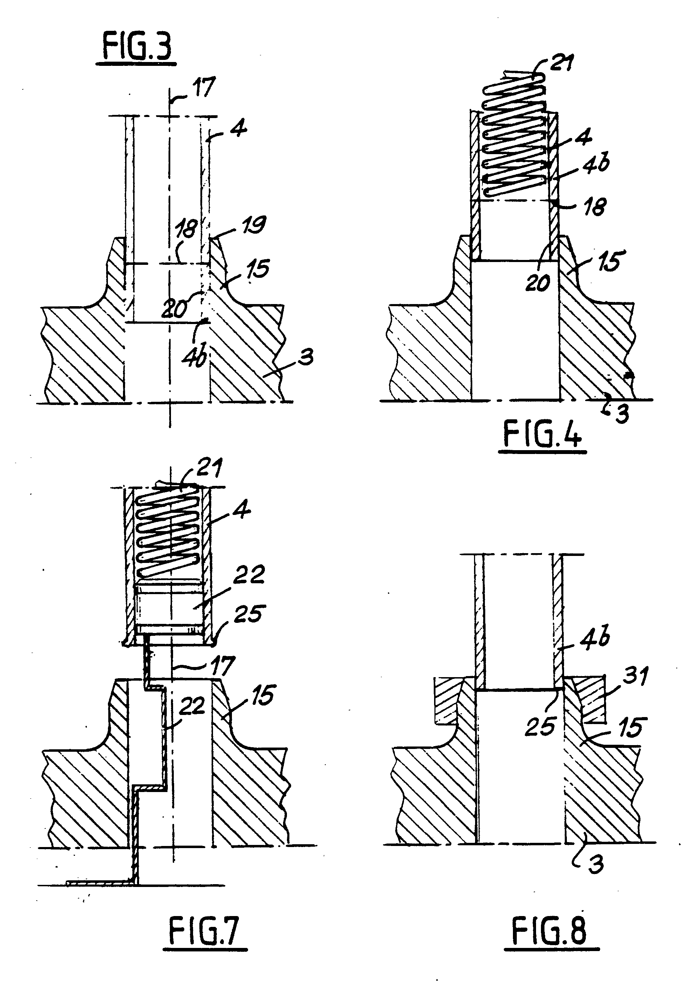

Sur la figure 3, on a représenté la partie postérieure du tube 4b en position dans la tétine 15 de la plaque tubulaire 3, après soudage de la partie antérieure 4a sur la tétine 14 correspondante de la première plaque tubulaire 2. La partie d'extrémité 4b du tube 4 est engagée dans la tétine 15 sur une longueur sensiblement supérieure à la longueur requise pour la réalisation d'une bonne jonction entre le tube 4 et la plaque tubulaire 3. Sur la figure 3, on a représenté en pointillés la trace 18 d'un plan transversal par rapport à l'axe 17 commun aux trous 13 traversant la plaque 3, à la tétine 15 et au tube 4 en position dans la structure du générateur de vapeur. Le plan transversal 18 est situé à une distance de 2 mm de l'extrémité de la tétine 15 et correspond au plan de coupe du tube 4 pour réaliser sa mise à longueur avant sa fixation dans la plaque tubulaire 3. Le plan de coupe 18 se trouve à l'intérieur de la tétine 15, si bien que la coupe de la partie d'extrémité 20 du tube par un outillage opérant à l'intérieur du tube 4 risque d'entrainer une détérioration ou même un découpage accidentel de la partie d'extrémité de la tétine 15 sur laquelle doit être réalisée la jonction.

Sur la figure 4, on a représenté l'extrémité du tube 4 après refroidissement de ce tube jusqu'à une température suffisante pour que la zone de découpage de la partie d'extrémité 20 du tube en sur longueur correspondant au plan de coupe transversal 18 soit déplacée de façon à se trouver à l'extérieur de l'alésage de la tétine 15. Le refroidissement du tube 4 est obtenu grâce à un serpentin 21 dans lequel circule un fluide à très basse température tel que l'azote liquide. Le serpentin 21 est introduit dans le tube 4 par l'ouverture 12 de la plaque tubulaire 2 et occupe pratiquement toute la longueur du tube dont il assure le refroidissement. La rétraction thermique du tube 4 entraine alors le déplacement du plan de coupe 18 jusqu'à une zone située nettement à l'extérieur de la tétine 15.

Il est alors possible de réaliser le découpage de la partie d'extrémité 20 du tube en sur longueur en utilisant le dispositif représenté sur les figures 5, 6 et 7.

Ce dispositif de découpage d'un tube par l'intérieur est bien connu et comporte un ensemble de centrage et de guidage 22, un plateau tournant 23, un ensemble d'entrainement du plateau tournant comportant un motoréducteur 24 et un pignon 25, une fraise 26 montée à l'extrémité d'un axe 27 et un chariot 28 assurant le support de l'axe de la fraise 27 et de son motoréducteur d'entrainement 29. Le dispositif de centrage et de guidage 22 est introduit dans l'alésage 13 de la plaque tubulaire et dans l'alésage du tube 4, depuis la face arrière de la plaque tubulaire 3 opposée à sa face 3a. Le dispositif 22 comporte deux parties reliées entre elles dont l'une assure le centrage dans le tube et l'autre dans la plaque tubulaire. Le plateau tournant 23 permet de faire effectuer à l'ensemble de l'outil de découpage un tour complet autour de l'axe 17 du tube.

Le chariot 28 permet de déplacer l'axe de fraise 27 à l'extrémité duquel est fixée la fraise 26 et son motoréducteur d'entrainement en rotation 29, dans une direction radiale du plateau 23. Ce déplacement radial permet de réaliser le mouvement d'avance de la fraise entre ses positions 26 et 26', pour réaliser le découpage du tube.

Ce découpage est réalisé alors que le tube est à une température t1 nettement inférieure à la température ambiante à laquelle a été réalisée la mise en place du tube et sa fixation sur la première plaque tubulaire 2. Cette température du tube lors du découpage, imposée par la présence du serpentin 21 parcouru par de l'azote liquide permet de déplacer la zone de découpage 18 à l'extérieur de la tétine 15. En fin de découpage, la fraise est dans sa position 26' légèrement saillante par rapport à la surface extérieure du tube 4. Si le découpage avait lieu à l'intérieur de la tétine 15, la fraise 26 entrerait alors légèrement à l'intérieur du métal de la tétine 15 en produisant une certaine détérioration tout-à-fait dommageable pour la qualité de la jonction entre le tube 4 et la plaque tubulaire 3.

Il est à noter qu'on a repéré, sur la face extérieure, la position exacte du plan de trace 19 correspondant à l'extrémité de la tétine, lorsque le tube 4 est dans sa position représentée sur la figure 3. Le plan de coupe 18 doit être situé en retrait de deux millimètres par rapport au plan 19.

Sur la figure 7, on a représenté le tube 4 à l'issue de l'opération de découpage, le dispositif de centrage et de guidage 22 de la machine de découpage étant encore en place dans la plaque tubulaire 3 et dans le tube 4. Ce dispositif de guidage et de centrage permet de maintenir le tube dans l'alignement exact du trou 13 de la plaque tubulaire 3. Le refroidissement par le serpentin 21 est maintenu de façon que l'extrémité découpée du tube 4 reste à l'extérieur de la tétine 15. On peut alors effectuer un ébavurage et éventuellement un chanfreinage sur l'extrémité 25 du tube qui vient d'être tronçonnée. Cet usinage de finition peut être effectué en utilisant l'outillage de découpage dont on remplace la fraise 26 par un outil approprié.

Le serpentin de refroidissement 21 est ensuite extrait du tube par la face arrière de la plaque tubulaire 2 et le tube est réchauffé jusqu'à la température ambiante par simple contact avec l'atmosphère. L'extrémité 25 du tube vient alors se placer à l'intérieur de la tétine 15, légèrement en avancée par rapport à l'extrémité de cette tétine. La longueur a de la zone de recouvrement entre le tube et la tétine est alors voisine de deux millimètres. On a donc obtenu par le procédé suivant l'invention un recouvrement faible et parfaitement contrôlé qui permet de réaliser une bonne jonction entre l'extrémité 4b du tube et la plaque tubulaire 3.

Il est d'ailleurs possible de prévoir un réchauffement du tube à une température t2 parfaitement déterminée et qui ne soit pas tributaire des conditions d'ambiance. Cette température t2 peut être imposée aux tubes par une circulation interne d'eau à la température t2. Dans ce cas, le repérage du plan 19 pourra être effectué dans la phase représentée sur la figure 3, alors que le tube est porté à la température t2.

On peut donc obtenir un très bon contrôle de la longueur de la zone de recouvrement du tube et de la tétine.

La fixation de l'extrémité 4b du tube 4 sur la plaque tubulaire 3 peut être effectuée comme représenté sur la figure 8.

Des pièces de renfort extérieur 31 sont disposées autour de la tétine 15 et un outil de dudgeonnage hydraulique ou pneumatique est introduit dans l'alésage intérieur de la partie d'extrémité 4b du tube 4. On réalise, grâce à l'outil de dudgeonnage, une expansion diamètrale de l'extrémité 4b du tube 4 et un léger écrasement de la partie de recouvrement du tube sur l'extrémité de la tétine 15 maintenue par les pièces de renfort extérieur 31. Le tube 4 est ainsi serti dans l'alésage intérieur de la tétine 15 et maintenu parfaitement en position par rapport à la plaque tubulaire 3. La fixation de l'extrémité 4b du tube 4 est complétée par une soudure annulaire 30 visible sur la figure 2. Cette soudure annulaire permet une refusion de la partie de recouvrement du tube et de la partie d'extrémité de la tétine 15.

La soudure 30 est contrôlée et si le contrôle est satisfaisant, on répète le cycle des opérations qui viennent d'être décrites sur un nouveau tube du générateur de vapeur.

Si la soudure s'avère défectueuse après contrôle, on effectue une réparation de cette soudure qui peut consister à supprimer la soudure défectueuse pour réaliser une nouvelle soudure.

Pour cela on réalise une découpe de la zone soudée par l'intérieur de la tétine 15. L'extrémité de la tétine et l'extrémité correspondante du tube qui viennent d'être séparées sont ensuite réusinées pour obtenir des surfaces nettes qui pourront ensuite être mises en contact pour assurer leur jonction. Le dispositif de centrage de la machine de découpage ou un autre dispositif de centrage et de guidage approprié est mis en place dans le tube et dans la tétine. On opère un chauffage du tube jusqu'à une température t3 supérieure à la température ambiante ou à la température t2 suivant le mode de réalisation choisi pour la mise en place du tube lors de la réalisation de la première soudure.

Ce chauffage du tube jusqu'à la température t3 peut être réalisé par une circulation d'eau ou d'un autre liquide caloporteur à l'intérieur du tube 4. La température t3 est choisie de façon que le tube subisse une dilatation thermique amenant sa nouvelle extrémité découpée et usinée à l'intérieur de la tétine, engagée dans l'alésage de cette tétine, sur une longueur correspondant à la longueur de recouvrement requise, généralement voisine de deux millimètres.

Le tube est alors de nouveau dans sa position représentée sur la figure 8 dans laquelle on peut réaliser sa fixation et son soudage sur la tétine 15.

La température t3 du tube est maintenue tant que la fixation du tube sur la plaque tubulaire 3 n'est pas assurée. Cette fixation peut être réalisée comme précédemment par dudgeonnage et par soudage.

Le chauffage du tube est ensuite interrompu et le tube revient à la température ambiante. Ce retour à la température ambiante se traduit par des contraintes dans le métal constituant le tube, puisque ce tube est maintenant fixé à ses deux extrémités.

Ces contraintes sont cependant très faibles puisque l'allongement relatif subi par le tube de grande longueur lorsqu'il est porté à la température t3 reste très faible. Cet allongement relatif est de l'ordre de $10^{-4}$.

Les contraintes résiduelles dans le tube peuvent d'ailleurs être éliminées par un traitement thermique de détensionnement à une température relativement modérée.

Le procédé suivant l'invention permet donc d'éviter un usinage du tube à l'intérieur du logement dans lequel ce tube doit être fixé, ce qui évite toute détérioration de la pièce recevant l'extrémité du tube et toute introduction de copeaux d'usinage à l'intérieur de cette pièce. D'autre part, le procédé permet de contrôler parfaitement la longueur de recouvrement du tube à l'intérieur de la pièce dans laquelle il est fixé.

Enfin, selon certaines modalités d'application, ce procédé permet de reprendre la fixation du tube, dans le cas où celle-ci aurait été réalisée de façon défectueuse.

On peut utiliser des moyens de refroidissement ou de réchauffage du tube différents de ceux qui ont été décrits, ces moyens pouvant utiliser des fluides d'échange liquides ou gazeux de nature quelconque. Les moyens de chauffage pourraient être également des moyens électriques à résistance ou à induction. Le réchauffage du tube jusqu'à la température t2 ou la température t3 pourrait être effectué par exemple grâce à un bobinage à induction.

L'outillage utilisé pour le découpage du tube peut être d'un type différent de celui qui a été décrit.

Les températures t1, t2 et t3 du tube lors des diverses phases qui ont été décrites seront choisies en fonction des dilatations ou rétractions nécessaires; les dilatations ou rétractions relatives du tube seront cependant toujours trés faibles puisque le découpage du tube pourra se faire à une distance très faible de l'extrémité de la pièce dans laquelle il est engagé et que la longueur de la zone de recouvrement nécessaire pour la jonction est toujours très faible par rapport à la longueur totale du tube.

**Revendications**

1. Procédé de raccordement d'un tube droit (4) de grande longueur à une structure comportant deux plaques tubulaires (2, 3) en position fixe l'une par rapport à l'autre entre lesquelles le tube (4) est fixé par ses extrémités (4a, 4b), le procédé consistant à mettre le tube en place dans la structure et à souder l'une de ses extrémités sur une première plaque tubulaire (2) correspondante à découper le tube (4) au voisinage de sa seconde extrémité (4b) pour sa mise à longueur et à souder la seconde extrémité (4b) du tube (4) l'intrieur d'un logement ménagé dans la seconde plaque tubulaire (3) sur une longueur de recouvrement faible et parfaitement déterminée, caractérisé par le fait:

que, préalablement à son découpage à longueur, on refroidit le tube (4) sur une partie au moins de sa longueur, jusqu'à une première température t1, de façon à obtenir une rétraction thermique suffisante de ce tube (4) pour que la zone de découpage (18) de sa seconde extrémité (4b) soit située, après refroidissement, à l'extérieur du logement (13) de la seconde plaque tubulaire (3, 15).

qu'on réalise le découpage de l'extrémité (4b) du tube maintenu à la température t1,

qu'on réchauffe le tube (4) jusquà une seconde température t2 supérieure à la première température t1, de façon que la seconde extrémité (4b) du tube (4) se trouve engagée, après réchauffage, dans le logement (13) de la seconde plaque tubulaire (3, 15) sur la longueur de recouvrement requise,

et qu'on réalise la soudure du tube (4) sur la seconde plaque tubulaire (3, 15), le tube (4) étant maintenu à la seconde température t2.

2. Procédé de raccordement selon la revendication 1, caractérisé par le fait que la seconde température t2 est la température ambiante et que le réchauffage du tube (4) a lieu par contact avec l'atmosphère.

3. Procédé de raccordement suivant l'une quelconque des revendications 1 et 2, caractérisé par le fait que le tube (4) est refroidi par une circulation d'un fluide à basse température tel que de l'azote liquide.

4. Procédé de raccordement suivant la revendication 3, caractérisé par le fait que le fluide à basse température circule dans un serpentin placé à l'intérieur du tube (4) sur une partie au moins de la longueur de ce tube.

5. Procédé de raccordement suivant l'une quelconque des revendications 1 à 4, caractérisé par le fait que le tube (4) est réchauffé jusqu'à la seconde température t2, par une circulation interne d'un fluide caloporteur tel que de l'eau.

6. Procédé de raccordement suivant l'une quelconque des revendications 1 à 5, caractérisé par le fait, que la fixation du tube (4) sur la seconde plaque tubulaire (3, 15) est effectuée par expansion diamètrale et par soudage du tube (4).

7. Procédé de raccordement suivant l'une quelconque des revendications 1 à 6, caractérisé par le fait que, dans le cas où la fixation du tube (4) sur la second plaque tubulaire (3, 15) a été réalisée de manière défectueuse, on réalise un découpage de la seconde extrémité (4b) du tube (4), on réchauffe le tube jusqu'à une troisième température t3 supérieure à la température t2 pour provoquer sa dilatation et l'introduction de l'extrémité découpée de sa partie (4b) dans le logement de la seconde plaque tubulaire (3, 15), sur une longueur correspondant à la longueur de recouvrement souhaitée et qu'on réalise une nouvelle soudure du tube (4) sur la seconde plaque tubulaire (3, 15), le tube (4) étant maintenu à la troisième température t3.

8. Procédé de raccordement suivant l'une quelconque des revendications 1 à 7, caractérisé par le fait que le réchauffage du tube jusqu'à la seconde température t2 est effectué par chauffage à induction.

9. Procédé de raccordement suivant la revendication 7, caractérisé par le fait que le réchauffage du tube jusqu'à la température t3 est effectué par un chauffage à induction.

10. Procédé de raccordement suivant l'une quelconque des revendications 1 à 9 pour le raccordement d'un tube (4) d'un générateur de vapeur à tubes droits aux plaques tubulaires (2, 3) constituant les parois de séparation de la boite à eau (6) et du collecteur de vapeur (8) de ce générateur de vapeur, respective.

11. Procédé suivant la revendication 10, caractérisé par le fait que le logement (13) de la seconde plaque tubulaire (3) recevant la seconde extrémité (4b) du tube (4) est constitué par une partie en saillie (15) de forme tubulaire de la plaque tubulaire (3) délimitant la boite à eau (6).

12. Procédé suivant l'une quelconque des revendications 10 et 11, caractérisé par le fait que les tubes ont une longueur comprise entre 20 et 30 mètres et que la longueur de recouvrement de l'extrémité (4b) du tube (4) dans la plaque tubulaire (3) est de l'ordre de 2 mm.

13. Procédé suivant l'une quelconque des revendications 1 à 12, caractérisé par le fait que la fixation du tube (4) sur la seconde plaque tubulaire (3) est réalisée par sertissage et par soudage.

**Patentansprüche**

1. Verfahren zum Verbinden eines geraden Rohres großer Länge mit einem Gegenstand mit zwei rohrförmigen Platten (2, 3) in zueinander fester Lage, zwischen denen das Rohr (4) mit seinen Enden (4a, 4b) befestigt ist, wobei das Verfahren aus einem Einsetzen des Rohres in den Gegenstand besteht und einem Anschweißen eines der Rohrenden an einer zugeordneten ersten rohrförmigen Platte (2), einem Abschneiden des Rohres (4) in der Nähe seines zweiten Endes (4b) für seine Längen-Einstellung und einem Anschweißen des zweiten Endes (4b) des Rohres (4) an das Innere eines Sitzes, der in der zweiten rohrförmigen Platte (3) auf einer geringfügigen und einwandfrei festgelegten Überdekkungslänge vorgesehen ist, dadurch gekennzeichnet,

daß das Rohr (4) vor seinem Abschneiden auf Länge wenigstens auf einem Teil seiner Länge bis zu einer ersten Temperatur t1 gekühlt wird, um ein ausreichendes thermisches Zusammenziehen dieses Rohres (4) zu erhalten, damit der Abschneide-Bereich (18) seines zweiten Endes (4b) nach dem Abkühlen außerhalb des Sitzes (13) der zweiten rohrförmigen Platte (3, 15) liegt, daß das Abschneiden des Rohrendes (4b) bei der Temperatur t1 erfolgt,

daß das Rohr (4) bis zu einer zweiten Temperatur t2 wiedererwärmt wird, die über der ersten Temperatur t1 liegt, damit sich das zweite Ende (4b) des Rohres (4) nach der Wiedererwärmung im Eingriff mit dem Sitz (13) der zweiten rohrförmigen Platte (3, 15) auf der erforderlichen Überdeckungslänge befindet und

daß das Anschweißen des Rohres (4) an der zweiten rohrförmigen Platte (3, 15) erfolgt, während das Rohr (4) bei der zweiten Temperatur t2 gehalten wird.

2. Verbindungs-Verfahren nach Anspruch 1, dadurch gekennzeichnet, daß die zweite Temperatur t2 die Umgebungstemperatur ist und daß die Erwärmung des Rohres (4) durch Kontakt mit der Atmosphäre stattfindet.

3. Verbindungs-Verfahren nach Anspruch 1 oder 2, dadurch gekennzeichnet, daß das Rohr (4) durch Zirkulation einer Flüssigkeit von niedriger Temperatur wie z.B. von flüssigem Stickstoff gekühlt wird.

4. Verbindungs-Verfahren nach Anspruch 3, dadurch gekennzeichnet, daß die Flüssigkeit von niedriger Temperatur in einer Rohrschlange zirkuliert, die im Innern des Rohres (4) mindestens auf einem Teil seiner Länge vorgesehen ist.

5. Verbindungs-Verfahren nach einem der Ansprüche 1 bis 4, dadurch gekennzeichnet, daß das Rohr (4) bis auf die zweite Temperatur t2 durch eine innere Zirkulation einer Flüssigkeit als Wärmeträger wie z.B. Wasser wiedererwärmt wird.

6. Verbindungs-Verfahren nach einem der Ansprüche 1 bis 5, dadurch gekennzeichnet, daß die Befestigung des Rohres (4) an der zweiten rohrförmigen Platte (3, 15) durch Ausdehnen seines Durchmessers und durch Anschweißen des Rohres (4) erfolgt.

7. Verbindungs-Verfahren nach einem der Ansprüche 1 bis 6, dadurch gekennzeichnet, daß in dem Fall, in dem die Befestigung des Rohres (4) an der zweiten rohrförmigen Platte (3, 15) auf ungenügende Weise vorgenommen wurde, das zweite Ende (4b) des Rohres (4) abgeschnitten wird, das Rohr dann bis zu einer dritten Temperatur t3 wiedererwärmt wird, die höher als die Temperatur t2 ist, um eine Wärmedehnung und das Einführes des von seinem Teil (4b) abgeschnittenen Endes in den Sitz der zweiten rohrförmigen Platte (3, 15) auf einer Länge entsprechend der gewünschten Überdeckungslänge zu erzielen, und daß ein neues Anschweißen des Rohres (4) an der zweiten rohrförmigen Platte (3, 15) vorgenommen wird, während das Rohr (4) bei der dritten Temperatur t3 gehalten wird.

8. Verbindungs-Verfahren nach einem der Ansprüche 1 bis 7, dadurch gekennzeichnet, daß die Wiedererwärmung des Rohres bis auf die zweite Temperatur t2 durch Induktionserwärmung vorgenommen wird.

9. Verbindungs-Verfahren nach Anspruch 7, dadurch gekennzeichnet, daß die Wiedererwärmung des Rohres bis auf die dritte Temperatur t3 durch die Induktionserwärmung vorgenommen wird.

10. Verbindungs-Verfahren nach einem der Ansprüche 1 bis 9, dadurch gekennzeichnet, daß für die Verbindungsherstellung eines Rohres (4) eines Dampferzeugers mit geraden Rohren an rohrförmigen Platten (2, 3) Trennwände für den Wasserkasten (6) bzw. den Dampfsammler (8) dieses Dampferzeugers vorgesehen sind.

11. Verfahren nach Anspruch 10, dadurch gekennzeichnet, daß der Sitz (13) der zweiten rohrförmigen Platte (3), der das zweite Ende (4b) des Rohres (4) aufnimmt, durch einen rohrförmigen Ansatz (15) der rohrförmigen Platte (3) gebildet wird, die den Wasserkasten (6) abgrenzt.

12. Verfahren nach Anspruch 10 oder 11, dadurch gekennzeichnet, daß die Rohre eine Länge zwischen 20 und 30 m haben und daß die Überdeckungslänge des Endes (4b) des Rohres (4) in der rohrförmigen Platte (3) in der Größenordnung von 2 mm liegt.

13. Verfahren nach einem der Ansprüche 1 bis 12, dadurch gekennzeichnet, daß die Befestigung des Rohres (4) an der zweiten rohrförmigen Platte (3) durch Bördelverbindung und durch Schweißen erfolgt.

## Claims

1. Method of connecting a very long straight tube (4) to a structure comprising two tubular plates (2, 3) which are fixed in position relative to each other and between which the tube (4) is fixed by its ends (4a, 4b), the method comprising putting the tube into position in the structure and welding one of its ends to a corresponding first tubular plate (2), cutting the tube (4) off in the vicinity of its second end (4b) to obtain the correct length and welding the second end (4b) of the tube (4) to the inside of a recess formed in the second tubular plate (3), over a short, perfectly determined length of overlap, characterised in that:

prior to cutting the tube (4) to length, the tube is cooled over at least part of its length to a first temperature t1, so as to obtain sufficient thermal shrinkage of this tube (4) to ensure that, after cooling, the cutting zone (18) of its second end (4b) is located outside the recess (13) in the second tubular plate (3, 15),

the end (4b) of the tube is cut off while the tube is maintained at the temperature t1,

the tube (4) is heated to a second temperature t2 higher than the first temperature t1, so that, after heating, the second end (4b) of the tube (4) is engaged in the recess (13) in the second tubular plate (3, 15) over the required length of overlap,

and the tube (4) is welded to the second tubular plate (3, 15) while the tube (4) is maintained at the second temperature t2.

2. Method of connection according to claim 1, characterised in that the second temperature t2 is ambient temperature and the tube (4) is heated by contact with the atmosphere.

3. Method of connection according to claim 1 or 2, characterised in that the tube (4) is cooled by the circulation of a fluid at low temperature, such as liquid nitrogen.

4. Method of connection according to claim 3, characterised in that the fluid at low temperature circulates in a coil placed inside the tube (4) over at least part of the length of the tube.

5. Method of connection according to any of claims 1 to 4, characterised in that the tube (4) is heated up to the second temperature t2 by the internal circulation of a heat-carrying fluid such as water.

6. Method of connection according to any of claims 1 to 5, characterised in that the tube (4) is fixed to the second tubular plate (3, 15) by diametrical expansion and by welding of the tube (4).

7. Method of connection according to any of claims 1 to 6, characterised in that, if the tube (4) has been fixed to the second tubular plate (3, 15) in a defective manner, the second end (4b) of the tube (4) is cut off, the tube is heated to a third temperature t3 higher than the temperature t2 in order to make it expand and enable the cut-off end of the portion (4b) to be inserted in the recess in the second tubular plate (3, 15), over a length corresponding to the desired length of overlap, and the tube (4) is welded once more to the second tubular plate (3, 15), while the tube (4) is maintained at the third temperature t3.

8. Method of connection according to any one of claims 1 to 7, characterised in that the heating of the tube to the second temperature t2 is effected by induction heating.

9. Method of connection according to claim 7, characterised in that the heating of the tube to the temperature t3 is effected by induction heating.

10. Method of connection according to any one of claims 1 to 9 for connecting a tube (4) of a steam generator with straight tubes to the tubular plates (2, 3) which form the walls separating off the water tank (6) and the steam collector (8), respectively, of the steam generator.

11. Method according to claim 10, characterised in that the recess (13) of the second tubular plate (3) receiving the second end (46) of the tube (4) consists of a tubular projecting portion (15) of the tubular plate (3) defining the water tank (6).

12. Method according to claim 10 or 11, characterised in that the tubes are between 20 and 30 metres long and the length of overlap of the end (4b) of the tube (4) in the tubular plate (3) is of the order of 2 mm.

13. Method according to any one of claims 1 to 12, characterised in that the tube (4) is attached to the second tubular plate (3) by crimping and welding.

FIG.1

FIG.6

FIG.5

FIG.2

EP 0 288 359 B1

FIG.3

FIG.4

FIG.7

FIG.8

3